# EUROPÄISCHE PATENTSCHRIFT

(11) **EP 2 268 933 B1**
(45) Veröffentlichungstag und Bekanntmachung des Hinweises auf die Patenterteilung: **05.12.2012**
(21) Anmeldenummer: 09733152.4
(22) Anmeldetag: 24.03.2009
(51) Int. Cl.: F16D 25/061, F16D 48/02

(54) **HYDRAULISCH ODER PNEUMATISCH BETÄTIGBARES FORMSCHLÜSSIGES SCHALTELEMENT**
POSITIVELY ENGAGING SHIFTING ELEMENT WHICH CAN BE HYDRAULICALLY OR PNEUMATICALLY ACTUATED
ÉLÉMENT DE COMMUTATION À ENGAGEMENT POSITIF POUVANT ÊTRE ACTIONNÉ HYDRAULIQUEMENT OU PNEUMATIQUEMENT

(30) Priorität: 16.04.2008 DE 102008001196
(43) Veröffentlichungstag der Anmeldung: 05.01.2011
(73) Patentinhaber: ZF Friedrichshafen AG, 88038 Friedrichshafen (DE)
(72) Erfinder: REISCH, Matthias, 88214 Ravensburg (DE); DREIBHOLZ, Ralf, 88074 Meckenbeuren (DE); GUMPOLTSBERGER, Gerhard, 88045 Friedrichshafen (DE); ZIEMER, Peter, 88069 Tettnang (DE); MOHR, Mark, 88069 Tettnang (DE); GÖTZ, Manuel, 88212 Ravensburg (DE)
(86) Internationale Anmeldenummer: PCT/EP2009/053431
(87) Internationale Veröffentlichungsnummer: WO 2009/127499

(56) Entgegenhaltungen:
- FR-A- 2 464 163
- US-A- 5 950 785

## Beschreibung

Die vorliegende Erfindung bezieht sich auf ein hydraulisch oder pneumatisch betätigbares formschlüssiges Schaltelement gemäß dem Oberbegriff des Patentanspruchs 1.

Insbesondere bezieht sich die Erfindung auf ein hydraulisch oder pneumatisch betätigbares formschlüssiges Schaltelement für ein lastschaltbares Automatgetriebe, vorzugsweise für ein Automatgetriebe in Planetenbauweise, Vorgelegebauweise oder in gemischter Bauweise oder für ein stufenloses Getriebe mit mehreren Bereichen, beispielsweise für ein hydrostatisches, mechanisches oder elektrisches Mehrbereichsgetriebe.

Bei lastschaltbaren Automatgetrieben sind in der Regel hydraulisch betätigbare Lamellenschaltelemente vorgesehen. Diese werden über einen hydraulisch betätigten Kolben, dessen Druck durch ein hydraulisches Steuergerät gesteuert wird, zusammengedrückt und auf diese Weise betätigt. Hierbei lässt sich durch gezielte Einstellung der Betätigungskraft und somit des Reibmoments bei Differenzdrehzahl eine Lastschaltung ohne Zugkrafteinbruch darstellen.

In nachteiliger Weise weisen diese Lamellenschaltelemente im offenen Zustand durch den geringen Abstand zwischen den Reibflächen und das darin enthaltende Öl bzw. Luft-Öl-Gemisch Schleppmomente bei Differenzdrehzahl auf.

Formschlüssige Schaltelemente bzw. Klauenkupplungen und Klauenbremsen sind aus vielen anderen Fahrzeug- und insbesondere Getriebeanwendungen bekannt; beispielsweise werden derartig ausgeführte Schaltelemente in automatisierten Vorgelegegetrieben oder in schaltbaren Längs- oder Quersperren eingesetzt. Bei diesen Anwendungen sind die Schaltelemente in der Regel pneumatisch oder elektro-mechanisch betätigbar ausgeführt.

Bei gewissen konstruktiven Gegebenheiten ist es möglich, Lamellenschaltelemente durch formschlüssige Schaltelemente zu ersetzen. Hierbei handelt es sich um Schaltelemente, die bei Hochschaltungen nur abschalten oder um Schaltelemente, die nur im Rückwärtsgang eingelegt sind.

Ein derartiges Getriebe geht beispielsweise aus der DE 10244023 A1 der Anmelderin hervor. Hierbei wird ein Automatgetriebe vorgeschlagen, umfassend mehrere Schaltelemente und mehrere über die Schaltelemente in einen Leistungsfluss schaltbare Zahnräder, bei dem zur Einstellung einer Übersetzung jeweils wenigstens eines der Schaltelemente geschlossen ist.

Bei dem bekannten Getriebe sind die Schaltelemente, welche bei einer Hochschaltung zugeschaltet werden, als reibschlüssige Schaltelemente ausgebildet, wobei die Schaltelemente, welche bei Hochschaltungen jeweils nur ein abzuschaltendes Schaltelement darstellen als formschlüssige Schaltelemente in Klauenform ausgeführt sind. Gemäß der DE 10244023 A1 können die formschlüssigen Schaltelemente als hydraulisch oder mechanisch betätigbare Schaltelemente ausgeführt sein.

Durch den Einsatz von formschlüssigen Schaltelementen bzw. Klauen werden die Schleppmomente weitgehend vermieden. Zudem benötigen Klauen durch die formschlüssige Übertragung geringere Betätigungskräfte und weniger Bauraum als Lamellenschaltelemente.

Um formschlüssige Schaltelemente bzw. Klauen innerhalb eines Automatgetriebes mit hydraulischer Steuerung hydraulisch zu betätigen, ist eine geeignete Betätigung der Klauen durch den bereits vorhandenen Hydraulikdruck besonders vorteilhaft.

So ist beispielsweise aus der US 5,950,785 ein hydraulisch betätigbares Schaltelement mit einer Klaue und einer in diese Klaue im eingerückten Zustand eingreifende Gegenklaue bekannt, bei dem die Klaue durch Druckbeaufschlagung eines in einem Kolbenraum angeordneten Kolbens, betätigbar ist. Hierbei ist die Druckzuführung des Kolbens mit einem hydraulischen Druckspeicher wirkverbunden.

Wenn eine Klaue direkt mit einem Kolben eines Hydrauliksystems verbunden ist, resultiert dies in dem Nachteil, dass bei einer Zahn-auf-Zahn Stellung Rückwirkungen durch das plötzliche Anhalten des Kolbens bei dem Hydrauliksystem, insbesondere bei mehrfachem Abweisen, entstehen. Des weiteren ist bei Überwindung der Zahn-auf-Zahn-Stellung die Einlegegeschwindigkeit der Klaue gegebenenfalls zu gering, um in ausreichend kurzer Zeit eine ausreichende Überdeckung der tragenden Flanken zu erreichen, da die Klauenverschiebegeschwindigkeit vom zur Verfügung stehenden Volumenstrom und somit von der Pumpenauslegung und den Kanalquerschnitten sowie von der Kolbenfläche abhängt.

Es können auch Situationen vorkommen, bei denen bei einer gewissen Differenzgeschwindigkeit die Geschwindigkeit nicht ausreichend ist, um die Klaue bei Treffen der Lücke weit genug einrücken zu können, um eine ausreichende Überdeckung sicherzustellen.

Um dieses Problem zu lösen, kann die Klauenlücke vergrößert werden; alternativ oder zusätzlich dazu kann die Anschrägung der Klauen verändert werden. Für den Fall der Vergrößerung der Klauenlücke wächst das Umschlagspiel bei Lastwechsel am Schaltelement, was sich in nachteiliger Weise ungünstig auf den Fahrkomfort und die Geräuschentwicklung auswirken kann.

Für den Fall der Veränderung der Anschrägung der Klauen entstehen axial wirkende Abweiskräfte, wodurch die Klauen immer mit Druck zuzuhalten sind; zudem wirken diese Axialkräfte auf die betreffenden Axiallager mit entsprechend ungünstigen Auswirkungen auf Lebensdauer und Wirkungsgrad.

Der vorliegenden Erfindung liegt die Aufgabe zugrunde, ein hydraulisch oder pneumatisch betätigbares formschlüssiges Schaltelement anzugeben, welches für den Einsatz in einem lastschaltbaren Automatgetriebe oder in einem stufenlosen Getriebe geeignet ist, bei dem die aus dem Stand der Technik bekannten erwähnten Nachteile vermieden werden. Insbesondere soll die Einspurgeschwindigkeit der Klaue des Schaltelements erhöht werden und eine ausreichende Überdeckung der tragenden Klauenflanken gewährleistet werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein hydraulisch oder pneumatisch betätigbares formschlüssiges Schaltelement vorgeschlagen, umfassend einen hydraulisch oder pneumatisch betätigbaren Kolben, welcher einen Kolbenraum aufweist, in dem sich das hydraulische Medium bzw. Druckmedium befindet, eine Klaue mit einer Klauenverzahnung und eine Gegenklaue, in die die Klauenverzahnung im eingerückten Zustand eingreift, bei dem die Einspurgeschwindigkeit der Klaue durch Entkopplung der Klaue vom hydraulischen bzw. pneumatischen Volumenstrom bei einer Zahn-auf-Zahn-Stellung der Klaue und der Gegenklaue zueinander und durch Vorspannen der Klaue durch einen mit dem Kolben in Wirkverbindung stehenden hydraulischen bzw. pneumatischen Druckspeicher erhöht wird.

Gemäß einer Weiterbildung der Erfindung wird die Klauenlücke, d. h. das Fenster, in welchem die Klaue einspuren kann, so gering wie möglich gehalten, damit die Wahrscheinlichkeit einer Zahn-auf-Zahn-Stellung im angelegten Zustand des Schaltelementes möglichst hoch ist. Hierbei bleibt in einem definierten Drehzahlfenster genügend Zeit, um ausreichend viel Volumenstrom nachzuschieben und in dem hydraulischen bzw. pneumatischen Druckspeicher die daraus resultierende Energie zu speichern. Wenn die Klaue auf eine Lücke trifft, wird erfindungsgemäß die Klaue durch die gespeicherte Energie sehr stark beschleunigt, wodurch eine ausreichende Überdeckung der Klauenflanken gewährleistet wird.

Vorzugsweise befindet sich der hydraulische bzw. pneumatische Druckspeicher in der Nähe des Kolbens des Schaltelementes, wobei der Kolben des Schaltelementes bevorzugterweise direkt mit der Klaue verbunden ist. Beispielsweise kann der hydraulische bzw. pneumatische Druckspeicher in einem Gehäuse des Schaltelementes, in einer Drucköl- bzw. Druckluftzuführung oder zentral in einer drehenden Welle angeordnet sein.

Des weiteren ist eine weitere Feder zum Zurückschieben (für den Fall dass der Zustand des Schaltelementes im drucklosen Zustand offen ist) oder zum Einrücken (für den Fall dass der Zustand des Schaltelementes im drucklosen Zustand geschlossen ist) der Klaue des Schaltelementes vorgesehen, wobei diese Feder gegen den Kolben wirkt, wenn dieser hydraulisch betätigt wird.

Die Erfindung wird im folgenden anhand der beigefügten Figuren beispielhaft näher erläutert. Es zeigen:
- Figur 1:: Eine schematische Schnittansicht einer bevorzugten Ausführungsform eines erfindungsgemäßen formschlüssigen Schaltelementes im ausgerückten Zustand;
- Figur 2:: Eine schematische Schnittansicht des erfindungsgemäßen formschlüssigen Schaltelementes aus Figur 1 im angelegten Zustand;
- Figur 3:: Eine schematische Schnittansicht des erfindungsgemäßen formschlüssigen Schaltelementes aus Figur 1 im vorgespannten Zustand; und
- Figur 4:: Eine schematische Schnittansicht des erfindungsgemäßen formschlüssigen Schaltelementes aus Figur 1 im eingelegten Zustand;

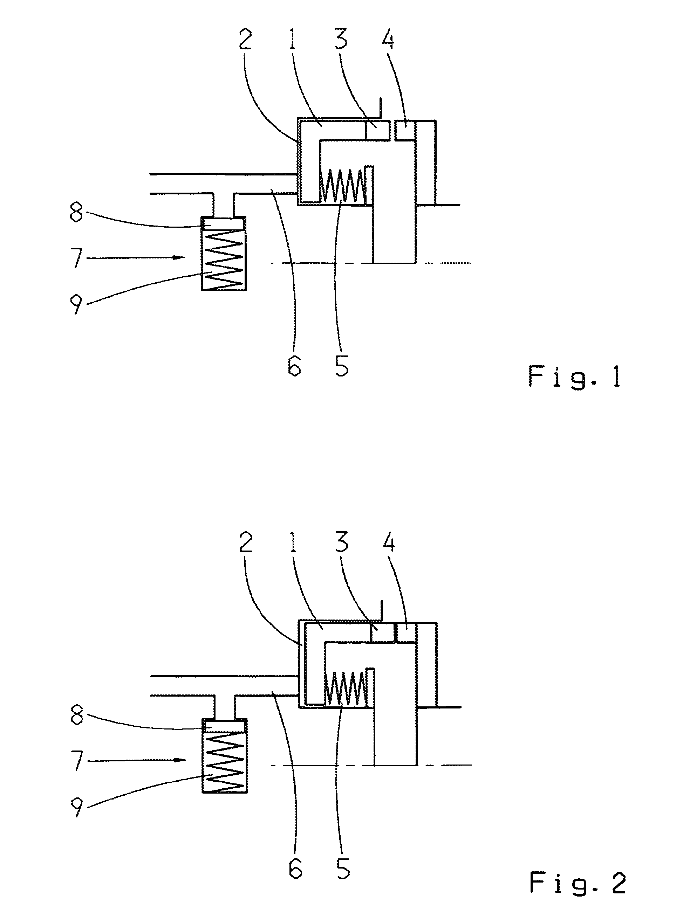

In Figur 1 ist ein beispielhafter Zusammenbau eines hydraulisch oder pneumatisch betätigbaren formschlüssigen Schaltelementes gemäß der Erfindung gezeigt.

Das Schaltelement umfasst einen hydraulisch oder pneumatisch betätigbaren Kolben 1, welcher einen Kolbenraum 2 aufweist, in dem sich das hydraulische Medium bzw. Druckmedium befindet, eine Klaue 3 und eine Gegenklaue 4, in die die Klaue 3 im eingerückten Zustand eingreift.

Ferner umfasst das Schaltelement eine als Ausrückfeder dienende Feder 5 zum Zurückschieben (für den Fall dass der Zustand des Schaltelementes im drucklosen Zustand offen ist, was der gezeigten Ausführungsform entspricht) oder zum Einrücken (für den Fall dass der Zustand des Schaltelementes im drucklosen Zustand geschlossen ist) der Klaue 3, wobei die Feder 5 gegen den Kolben 1 wirkt, wenn dieser hydraulisch bzw. pneumatisch betätigt wird. Für den Fall eines Schaltelementes, welches im drucklosen Zustand geschlossen bzw. eingerückt ist (normally-closed-Anordnung) vertauschen sich der Kolbenraum 2 und die Feder 5. Bei dem in Figur 1 gezeigten Beispiel ist das Schaltelement im drucklosen Zustand offen, so dass die Feder 5 gegen den Kolben 1 wirkt, wenn dieser nach rechts verschoben wird. Vorzugsweise wirkt die Feder 5 direkt auf den Kolben 1.

Im Rahmen einer weiteren, nicht dargestellten Ausführungsform ist anstelle der Feder 5 ein weiterer Druckraum vorgesehen, so dass das Zurückschieben (für den Fall dass der Zustand des Schaltelementes im drucklosen Zustand offen ist) bzw. das Ausrücken (für den Fall dass der Zustand des Schaltelementes im drucklosen Zustand geschlossen ist) der Klaue 3 durch Aufbauen eines Gegendrucks, der auf den Kolben 1 wirkt, hydraulisch erfolgt.

Mit 6 ist in der Figur die Druckmediumzuführung des Kolbens 1 bezeichnet, welche mit dem Kolbenraum 2 verbunden ist.

Gemäß der Erfindung ist ein mit der Druckmediumzuführung 6 verbundener hydraulischer bzw. pneumatischer Druckspeicher 7 vorgesehen, welcher es ermöglicht, bei einer Zahn-auf-Zahn-Stellung der Klauen 3 und 4 zueinander, die durch den Volumenstrom erzeugte Energie zu speichern. Diese wird freigegeben, wenn die Klaue 3 bei einer weiteren Drehung auf eine Lücke der Gegenklaue 4 trifft. Durch den Druckspeicher wird also eine Aufrechterhaltung des Volumenstromes bei einer Zahn-auf-Zahn-Stellung der Klauen 3 und 4 zueinander ermöglicht.

Wie Figur 1 zu entnehmen, ist der Druckspeicher 7 als Kolbenspeicher ausgeführt und umfasst einen Speicherkolben 8 und eine Speicherfeder 9. Durch den Volumenstrom wird der Kolben 8 bei einer Zahn-auf-Zahn-Stellung der Klauen 3 und 4 zueinander und somit bei feststehendem Kolben 1 (der Kolben 1 ist direkt mit der Klaue 3 verbunden) gegen die Kraft der Feder verschoben; die Energie wird als Federenergie gespeichert und anschließend, wenn der Kolben 1 weiterbewegt werden kann, was der Fall ist, wenn die Klaue 3 auf eine Lücke der Gegenklaue 4 trifft, als hydraulische Energie auf den Kolben 1 zum Schließen des Schaltelementes übertragen.

Des weiteren ist gemäß der Erfindung vorgesehen, dass die Klauenlücke so gering wie möglich gehalten wird, damit die Wahrscheinlichkeit einer Zahn-auf-Zahn-Stellung der Klauen 3 und 4 zueinander beim Anlegen des Schaltelementes möglichst hoch ist.

In Figur 2 ist das in Figur 1 gezeigte erfindungsgemäße Schaltelement im angelegten Zustand gezeigt, wobei die Stellung von Klaue 3 und Gegenklaue 4 zueinander eine Zahn-auf-Zahn-Stellung ist; die Feder 9 des Druckspeichers 7 ist noch nicht vorgespannt.

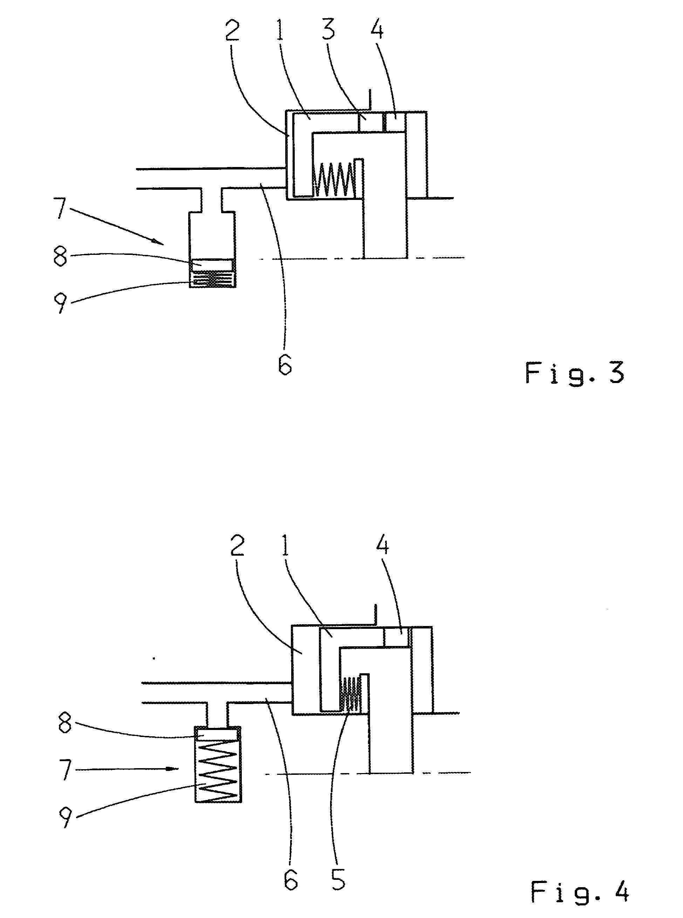

Wenn der Volumenstrom aufrechterhalten wird, kann sich bei der Zahn-auf-Zahn-Stellung der Kolben 1 nicht weiter in Richtung auf die Maximalposition bewegen (d.h. in den Figuren nach rechts), so dass, wie in Figur 3 dargestellt, die Feder 9 zusammengedrückt und vorgespannt wird. Der Speicherkolben 8 ist bei dem gezeigten Beispiel in die maximale Position verschoben.

Wenn die Klaue 3 bei einer weiteren Drehung auf eine Lücke der Gegenklaue 4 trifft, wird der Kolben 1 und somit die mit dem Kolben verbundene Klaue 3 durch die in der Feder 9 gespeicherte Energie, die in hydraulischer Energie umgewandelt wird sehr stark beschleunigt und somit sehr schnell eingerückt, wodurch eine ausreichende Überdeckung der tragenden Klauenflanken des Schaltelementes gewährleistet wird. Das erfindungsgemäße Schaltelement im eingerückten Zustand ist Gegenstand der Figur 4.

Gemäß der Erfindung kann die Feder 5 als einzelne Spiralfeder, als Spiralfederpaket, als Tellerfeder, als Tellerfederpaket oder als sonstige mechanische Feder ausgeführt sein. Der Druckspeicher 7 kann als hydraulischer bzw. pneumatischer Speicher in Form eines Spiralfederspeichers mit Kolben oder eines Tellerfederspeichers mit Kolben, als Gasdruckspeicher oder als beliebiger geeigneter hydraulischer bzw. pneumatischer Druckspeicher ausgeführt sein.

Ferner kann als Druckmedium zur Betätigung des Kolbens 1 des Schaltelementes Öl, Luft oder ein sonstiges geeignetes Druckmedium verwendet werden.

Zudem können die Klauenverzahnungen sowohl als Axialklauen als auch als Radialklauen bzw. als beliebige formschlüssige zur Drehmomentübertragung geeignete Einrichrungen ausgebildet sein. Bei einem Einsatz als Klauenkupplung, d. h. wenn beide Seiten drehen, kann in vorteilhafter Weise ein zusätzlicher Rotationsausgleich vorgesehen sein, der beispielsweise im Raum der Ausrückfeder 5 angeordnet sein kann.

Selbstverständlich fällt auch jede konstruktive Ausbildung, insbesondere jede räumliche Anordnung der Bauteile des erfindungsgemäßen Schaltelementes an sich sowie zueinander und soweit technisch sinnvoll, unter den Schutzumfang der vorliegenden Ansprüche, ohne die Funktion des Schaltelementes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Kolben
- 2: Kolbenraum
- 3: Klaue
- 4: Gegenklaue
- 5: Feder
- 6: Druckmediumzuführung
- 7: Druckspeicher
- 8: Speicherkolben
- 9: Speicherfeder

## Patentansprüche

1. Hydraulisch oder pneumatisch betätigbares formschlüssiges Schaltelement, umfassend einen hydraulisch oder pneumatisch betätigbaren Kolben (1), welcher einen Kolbenraum (2) aufweist, in dem sich das hydraulische Medium bzw. Druckmedium befindet, eine Druckmediumzuführung (6) für den Kolben (1), eine Klaue (3) und eine Gegenklaue (4), in die die Klaue (3) im eingerückten Zustand eingreift und einen über die Druckmediumzuführung (6) mit dem Kolben (1) wirkverbundenen hydraulischen bzw. pneumatischen Druckspeicher (7), **dadurch gekennzeichnet, dass** der als Kolbenspeicher ausgeführte und einen Speicherkolben (8) und eine Speicherfeder (9) umfassende Druckspeicher (7) in einem Gehäuse des Schaltelementes angeordnet ist und dass der Kolbenraum (2) parallel sowohl mit dem Druckspeicher (7) als auch mit der Druckmediumzuführung (6) verbunden ist, so dass durch einen Volumenstrom aus der Druckmediumzuführung (6) der Speicherkolben (8) bei einer Zahn-auf-Zahn-Stellung der Klauen (3) und (4) zueinander, und somit bei feststehendem Kolben (1), gegen die Kraft der Speicherfeder (9) verschoben wird und die hydraulische Energie aus der Druckmediumzuführung (6) im Druckspeicher (7) als Federenergie gespeichert wird, wobei, wenn der Kolben (1) weiterbewegt werden kann, wenn die direkt mit dem Kolben (1) verbundene Klaue (3) auf eine Lücke der Gegenklaue (4) trifft, die gespeicherte Energie als hydraulische Energie auf den Kolben (1) und damit auf die Klaue (3) zu deren Beschleunigung zum Schließen des Schaltelementes übertragen wird, wodurch eine ausreichende Überdeckung der tragenden Klauenflanken gewährleistet ist.

2. Hydraulisch oder pneumatisch betätigbares formschlüssiges Schaltelement nach Anspruch 1, **dadurch gekennzeichnet, dass** eine Feder (5) zum Zurückschieben der Klaue (3) vorgesehen ist, wobei die Feder (5) gegen den Kolben (1) wirkt, wenn dieser hydraulisch bzw. pneumatisch betätigt wird.

3. Hydraulisch oder pneumatisch betätigbares formschlüssiges Schaltelement nach Anspruch 2, **dadurch gekennzeichnet, dass** die Ausrückfeder (5) direkt auf den Kolben (1) wirkt.

4. Hydraulisch oder pneumatisch betätigbares formschlüssiges Schaltelement nach Anspruch 1, **dadurch gekennzeichnet, dass** ein weiterer Druckraum vorgesehen ist, so dass das Zurückschieben der Klaue (3) durch Aufbauen eines Gegendrucks, der auf den Kolben 1 wirkt, hydraulisch erfolgt.

5. Hydraulisch oder pneumatisch betätigbares formschlüssiges Schalt-element nach einem der Ansprüche 2 oder 3, dadurch **gekennzeichne t**, dass die Feder (5) als einzelne Spiralfeder, als Spiralfederpaket, als Tellerfeder, als Tellerfederpaket oder als sonstige mechanische Feder ausgeführt ist.

6. Hydraulisch oder pneumatisch betätigbares formschlüssiges Schaltelement nach Anspruch 1 **dadurch gekennzeichnet, dass** der hydraulische bzw. pneumatische Druckspeicher (7) in einem Gehäuse des Schaltelementes in einer Drucköl- bzw. Druckluftzuführung angeordnet ist.

7. Hydraulisch oder pneumatisch betätigbares formschlüssiges Schaltelement nach Anspruch 1 **dadurch gekennzeichnet, dass** der hydraulische bzw. pneumatische Druckspeicher (7) in einem Gehäuse des Schaltelementes zentral in einer drehenden Welle angeordnet ist.

8. Hydraulisch oder pneumatisch betätigbares formschlüssiges Schaltelement nach Anspruch 1, **dadurch gekennzeichnet, dass** der Kolben (1) direkt mit der Klaue (3) verbunden ist.

9. Hydraulisch oder pneumatisch betätigbares formschlüssiges Schaltelement nach einem der vorangehenden Ansprüche, **dadurch gekennzeichnet, dass** die Klauenverzahnungen sowohl als Axialklauen als auch als Radialklauen bzw. als beliebige formschlüssige zur Drehmomentübertragung geeignete Klauen ausgebildet sind.

10. Hydraulisch oder pneumatisch betätigbares formschlüssiges Schaltelement nach einem der vorangehenden Ansprüche, **dadurch gekennzeichnet, dass** für den Fall dass beide Seiten des Schaltelementes drehen ein Rotationsausgleich vorgesehen ist.

## Claims

1. Hydraulically or pneumatically actuable positively engaging selector element, comprising a hydraulically or pneumatically actuable piston (1) which has a piston space (2), in which the hydraulic medium or pressure medium is situated, a pressure-medium feed means (6) for the piston (1), a claw (3) and a corresponding claw (4), into which the claw (3) engages in the engaged state, and a hydraulic or pneumatic pressure accumulator (7) which is operatively connected to the piston (1) via the pressure-medium feed means (6), **characterized in that** the pressure accumulator (7) which is configured as a piston accumulator and comprises an accumulator piston (8) and an accumulator spring (9) is arranged in a housing of the selector element, and **in that** the piston space (2) is connected in parallel both to the pressure accumulator (7) and to the pressure-medium feed means (6), with the result that, in the case of a tooth-on-tooth position of the claws (3) and (4) with respect to one another, and therefore in the case of a stationary piston (1), the accumulator piston (8) is displaced counter to the force of the accumulator spring (9) by a volumetric flow out of the pressure-medium feed means (6), and the hydraulic energy from the pressure-medium feed means (6) is stored in the pressure accumulator (7) as spring energy, the stored energy being transmitted as hydraulic energy to the piston (1) and therefore to the claw (3) in order to accelerate it for closing the selector element when the piston (1) can be moved further, when the claw (3) which is connected directly to the piston (1) comes into contact with a gap of the corresponding claw (4), as a result of which sufficient coverage of the supporting claw flanks is ensured.

2. Hydraulically or pneumatically actuable positively engaging selector element according to Claim 1, **characterized in that** a spring (5) is provided for pushing back the claw (3), the spring (5) acting counter to the piston (1) when the latter is actuated hydraulically or pneumatically.

3. Hydraulically or pneumatically actuable positively engaging selector element according to Claim 2, **characterized in that** the disengagement spring (5) acts directly on the piston (1).

4. Hydraulically or pneumatically actuable positively engaging selector element according to Claim 1, **characterized in that** a further pressure space is provided, with the result that the claw (3) is pushed back hydraulically by a counter-pressure being built up which acts on the piston 1.

5. Hydraulically or pneumatically actuable positively engaging selector element according to either of Claims 2 and 3, **characterized in that** the spring (5) is configured as an individual helical spring, as a helical spring assembly, as a disc spring, as a disc spring assembly or as another mechanical spring.

6. Hydraulically or pneumatically actuable positively engaging selector element according to Claim 1, **characterized in that** the hydraulic or pneumatic pressure accumulator (7) is arranged in a compressed-oil or compressed-air feed line in a housing of the selector element.

7. Hydraulically or pneumatically actuable positively engaging selector element according to Claim 1, **characterized in that** the hydraulic or pneumatic pressure accumulator (7) is arranged centrally in a rotating shaft in a housing of the selector element.

8. Hydraulically or pneumatically actuable positively engaging selector element according to Claim 1, **characterized in that** the piston (1) is connected directly to the claw (3).

9. Hydraulically or pneumatically actuable positively engaging selector element according to one of the preceding claims, **characterized in that** the claw toothing systems are configured both as axial claws and as radial claws or as any desired positively engaging claws which are suitable for torque transmission.

10. Hydraulically or pneumatically actuable positively engaging selector element according to one of the preceding claims, **characterized in that** rotation equalization is provided for the case where both sides of the selector element rotate.

## Revendications

1. Elément de commutation à engagement positif pouvant être actionné hydrauliquement ou pneumatiquement, comprenant un piston (1) pouvant être actionné hydrauliquement ou pneumatiquement, qui présente une chambre de piston (2) dans laquelle se trouve le milieu hydraulique ou le milieu sous pression, une alimentation en milieu sous pression (6) pour le piston (1), une griffe (3) et une griffe conjuguée (4), dans laquelle la griffe (3) vient en prise dans l'état embrayé, et un accumulateur de pression (7) hydraulique ou pneumatique en liaison fonctionnelle avec le piston (1) par le biais de l'alimentation en milieu sous pression (6), **caractérisé en ce que** l'accumulateur de pression (7) réalisé sous forme d'accumulateur à piston et comprenant un piston d'accumulateur (8) et un ressort d'accumulateur (9) est disposé dans un boîtier de l'élément de commutation et **en ce que** la chambre de piston (2) est connectée parallèlement à l'accumulateur de pression (7) ainsi qu'à l'alimentation en milieu sous pression (6), de sorte que, sous l'effet d'un débit volumique provenant de l'alimentation en milieu sous pression (6), le piston d'accumulateur (8) soit poussé à l'encontre de la force du ressort d'accumulateur (9), dans le cas d'une position dent sur dent des griffes (3) et (4) l'une par rapport à l'autre, et donc lorsque le piston (1) est fixe, et que l'énergie hydraulique provenant de l'alimentation en milieu sous pression (6) est accumulée sous forme d'énergie de ressort dans l'accumulateur sous pression (7), et, lorsque le piston (1) peut être déplacé davantage, lorsque la griffe (3) connectée directement au piston (1) entre dans un espace entre dents de la griffe conjuguée (4), l'énergie accumulée sous forme d'énergie hydraulique étant transmise au piston (1) et donc à la griffe (3) en vue de son accélération pour fermer l'élément de commutation, de sorte qu'un recouvrement suffisant des flancs des griffes porteurs soit assuré.

2. Elément de commutation à engagement positif pouvant être actionné hydrauliquement ou pneumatiquement selon la revendication 1, **caractérisé en ce qu'**un ressort (5) pour ramener la griffe (3) est prévu, le ressort (5) agissant contre le piston (1) lorsque celui-ci est actionné hydrauliquement ou pneumatiquement.

3. Elément de commutation à engagement positif pouvant être actionné hydrauliquement ou pneumatiquement selon la revendication 2, **caractérisé en ce que** le ressort de rappel (5) agit directement sur le piston (1).

4. Elément de commutation à engagement positif pouvant être actionné hydrauliquement ou pneumatiquement selon la revendication 1, **caractérisé en ce qu'**il est prévu une chambre de pression supplémentaire de telle sorte que le retour de la griffe (3) s'effectue de manière hydraulique par établissement d'une pression conjuguée qui agit sur le piston (1).

5. Elément de commutation à engagement positif pouvant être actionné hydrauliquement ou pneumatiquement selon l'une quelconque des revendications 2 ou 3, **caractérisé en ce que** le ressort (5) est réalisé sous forme de ressort en spirale unique, sous forme de paquet de ressorts en spirale, sous forme de ressort Belleville, sous forme de paquet de ressorts Belleville ou sous forme de ressort mécanique différent.

6. Elément de commutation à engagement positif pouvant être actionné hydrauliquement ou pneumatiquement selon la revendication 1, **caractérisé en ce que** l'accumulateur de pression (7) hydraulique ou pneumatique est disposé dans un boîtier de l'élément de commutation dans une alimentation en huile sous pression ou en air sous pression.

7. Elément de commutation à engagement positif pouvant être actionné hydrauliquement ou pneumatiquement selon la revendication 1, **caractérisé en ce que** l'accumulateur de pression (7) hydraulique ou pneumatique est disposé dans un boîtier de l'élément de commutation de manière centrale dans un arbre rotatif.

8. Elément de commutation à engagement positif pouvant être actionné hydrauliquement ou pneumatiquement selon la revendication 1, **caractérisé en ce que** le piston (1) est connecté directement à la griffe (3).

9. Elément de commutation à engagement positif pouvant être actionné hydrauliquement ou pneumatiquement selon l'une quelconque des revendications précédentes, **caractérisé en ce que** les dentures précédentes sont réalisées sous forme de griffes axiales ainsi que sous forme de griffes radiales ou sous forme de griffes quelconques appropriées à engagement positif pour le transfert de couple.

10. Elément de commutation à engagement positif pouvant être actionné hydrauliquement ou pneumatiquement selon l'une quelconque des revendications précédentes, **caractérisé en ce qu'**une compensation de la rotation est prévue au cas où les deux côtés de l'élément de commutation tournent.
